# EUROPEAN PATENT APPLICATION

(11) **EP 3 479 683 A1**
(43) Date of publication of application: **08.05.2019**
(21) Application number: 17200480.6
(22) Date of filing: 07.11.2017
(51) Int. Cl.: A01G 25/16

(54) **WATER SPRINKLING SYSTEM**

(71) Applicant: Vestel Elektronik Sanayi ve Ticaret A.S., 45030 Manisa (TR)
(72) Inventor: TURGUT, Hüseyin Ilker, 45030 Manisa (TR); ILHAN, Tugce, 45030 Manisa (TR)
(74) Representative: Ascherl, Andreas

(57) **Abstract**

A water sprinkling system (1) for spraying water in a field is described for irrigating the field, the system (1) comprising a sprinkler (2) comprising a sprinkler head (3) adapted to sprinkle water variably in various three-dimensional regions of the field and a controller (4) adapted to control the sprinkler head (3) to sprinkle the water in three-dimensional regions variably based on at least one of a location of an obstacle in the region, a height of the obstacle in the region, a location of the plant in the region, or a height of the plant in the region or the combination thereof.

## Description

This invention refers to a water sprinkling system for spraying water in a field for irrigating the field according to claim 1.

### Background of the Invention

In known irrigation systems water is sprayed to a field or a garden, which results in excessive water loss in long-term use. Generally, the water use in the irrigation is inefficient, especially because plants or flowers have different heights, or because there are gaps in the circular area where the sprinkle is sprayed, or due to obstacles in the field or garden where also the water is sprayed during watering the field/garden. With time, known irrigation system have improved only to on/off status according to the weather condition or the amount of soil moisture. For the global warming, which is one of today's most important nature problems, significant changes have to be made in the efficient use of water resources.

US Patent Publication No. US9265204 discloses an irrigation system which continuously monitors the status of lawns or plants under its care and directs water to where it is needed, when it is needed to maintain lawn or plant health. The system is also provided with a water nozzle with a pan and tilt capability, which can direct water where it is needed. The system further includes an image sensor which continually takes and analyzes images of the lawns or plants, while law is being watered. The image sensor monitors where the water is landing while the irrigation system is delivering water to the lawns or plants. This information is used to adjust the water delivery aim to ensure that the intended spots are accurately irrigated.

US Patent Publication No. US20150100168 discloses a plant profile water management system which includes a water controller delivering water to a plant, a processor coupled to the water controller, and a mobile computing device coupled to the processor by a radio link. The mobile computing device communicates a plant type profile to the processor. The processor executes the rules according to said plant type profile to control the timing and quantity of water flow output to the plants.

US Patent Publication No. US20140026474 discloses a system for growing plants or other living organisms. The system includes a container that includes sensors for sensing conditions of the plant. The system further includes dispensers, such as emitters, provide a way to dispense materials such as water, nutrients, insecticides, herbicides, etc. under human or machine control. A network connection is also provided to allow monitoring and control of the container from a remote site. Management of plant growth can be local or remote, or a combination of the two.

US Patent Publication No. US20140026474 discloses an adjustable sprinkler system distributes water from a garden hose through a feed housing to a pair of pivotally attached arms. There is a sprinkler unit attached near the end of each arm. Each sprinkler unit has an interchangeable spray head attached that is specific to the desired watering pattern. By pivoting the arms away from one another, the sprinkler system is placed on either side of the base of the shrub or tree to be watered. This adjustable sprinkler system accommodates newly planted and existing small to large and short to tall trees and shrubs, provides a multitude of spray patterns at varying water volumes, and minimizes water waste.

### Object of the Invention

It is therefore the object of the present invention is to provide for a technique to efficiently spray the water, inparticular to save water.

### Description of the Invention

The before mentioned object is solved by a water sprinkling system for spraying water in a field for irrigating the field according to claim 1.

A water sprinkling system for spraying water in a field for irrigating the field, the system comprising a sprinkler comprising a sprinkler head adapted to sprinkle water variably in various three-dimensional regions of the field, and a controller adapted to control the sprinkler to sprinkle the water in three-dimensional regions variably based on at least one of a location of an obstacle in the region, a height of the obstacle in the region, a location of the plant in the region, or a height of the plant in the region or the combination thereof.

This embodiment is beneficial, as this provides for a solution to optimally and conservatively use water during irrigation based on topology of the plants in a field or garden. The water usage is regulated by the controller based on the location of obstacle, height of the obstacle, location of the plant, or height of the plant. These parameters supports the controller to control the sprinkler head to spray water in the location of the plant, and upto the height of the plant, avoiding the obstacles.

With this invention, less energy is used and the bad humidity and steam that is only to be thrown away, will be minimized without disturbing sound.

Further preferred embodiments are subject-matter of dependent claims and/or of the following specification parts.

According to a preferred embodiment of the invention, the system comprises a sensor adapted to scan a three-dimensional area in the field or above the field, to detect at least the plant or the obstacle or the combination thereof, and to generate a sensor data, and a sensor processor adapted to receive and process the sensor data, and adapted to generate at least one of an obstacle location data defining location of the obstacle in the region, an obstacle height data defining height of the obstacle in the region, a plant location data defining the location of the plant in the region, a plant height data defining the height of the plant in the region, or combination thereof. The controller is adapted to control the sprinkler head to sprinkle the water in three-dimensional regions variably based on at least one of the obstacle location data, the obstacle height data, the plant location data, or the plant height data, or combination thereof.

This embodiment is beneficial as it provides the sensor which detects the plants or the obstactles, and the sensor processor which determines exact location of plant or obstacle, height of the plant or obstacle. The data so generated can be optimally used by the controller to accurately control the sprinkler head to spray the water.

According to a further embodiment of the invention, the system comprising a remote processor placed remotely with respect to the sensor, adapted to be in communication coupling to the sensor, to receive and process at least one of the obstacle location data, the obstacle height data, the plant location data, or the plant height data, or combination thereof, and to generate a plant topography related to height of the plants, and location of the plants in the field, and above the field.

This embodiment is helpful, as it provides for generation of plant topography, which shall be helpful for determining the plant pattern, and programming the controller with the plant pattern, so that appropriate motion algorithm can be developed for regulating the sprinkler head.

According to another embodiment of the invention, the remote processor is adapted to receive an identification input from a user to identify the plant or the obstacle, wherein the remote processor is adapted to process the identification input to generate the plant topography.

This embodiment is helpful, as it makes a clear distinction between the plant and the obstacle, which may have been missed out by the sensor processor, and substantially reduces the false positives, so as to further optimise the plant topography.

According to a further preferred embodiment of the invention, the remote processor is adapted to receive a parameter information from the user related to dimensions of the field, wherein the remote processor is adapted to process the parameter information to generate the plant topography.

This embodiment is helpful, as it provides a mechanism to identify the limit of the field, so that the limit of the plant topography is maintained only upto the boundaries of the field.

According to another embodiment of the invention, the sensor is adapted to detect a boundary of the field, and to generate a boundary data, the sensor processor is adapted to receive and process the boundary data, and to generate the parameter information, the remote processor is adapted to receive and process the parameter information, and to generate the plant topography.

This embodiment is beneficial, as it provides an automatic way, without any human intervention to determine the boundaries of the field for optimizing the plant topography.

According to a further preferred embodiment of the system, the remote processor is adapted to generate a computer program product based on the plant topography, the computer program relates to controlling of sprinkler head for creating a water sprinkling mechanism to sprinkler water in three dimensional regions of the field.

This embodiment is beneficial, as generating the computer program product helps to easily program the controller to provide for a repetitive and accurate pattern for motioning of the sprinkler head for watering the field, as desired for each regions of the field.

According to a further embodiment of the system, the remote processor is adapted to receive a plant information from the user related to categorization of the plant, wherein the remote processor is adapted to process the plant information to generate the computer program product.

The embodiment is beneficial, as it provides for further optimizing watering of the plant based on the type of the plant, in addition to the height or location of the plant.

According to another embodiment of the invention, the system comprises a memory adapted to store the computer program product, the computer program product on execution by the controller enables the controller to control the sprinkler head to sprinkle the water in three-dimensional regions in a variable manner.

This embodiment is beneficial, as it provides a repeating and storing of the computer program product, and wherein it is available for execution onto the controller whenever is required.

According to a further embodiment of the system, the remote processor is adapted to send the computer program product to the controller for storing in the memory via a communication network.

This embodiment is helpful, as it saves manual effort to download the computer program product, and further load the computer program product into the memory.

According to another embodiment of the system, the sensor is adapted to scan the three-dimensional area in the field or above the field at regular intervals, the sensor processor is adapted to generate and send at least one of the obstacle location data, the obstacle height data, the plant location data, or the plant height data, or combination thereof, to the remote processor at the regular intervals, the remote processor processes at least one of the obstacle location data, the obstacle height data, the plant location data, or the plant height data, or combination thereof, to generate a new plant topography, compare the new plant topography to a previous plant topography, and if the new topography is different to the previous topography, the remote processor is adapted to generate the computer program product.

This embodiment is helpful, as it facilities for dynamic monitoring of the field to check for a change of topography, and accordingly modify the computer program product, so that the controller can regulate the sprinkler head based on the modified computer program product.

According to a further embodiment of the system, the sensor is an optical based sensor.

This embodiment is helpful, as it provides an efficient implementation of the sensor for detecting the plant or the obstacle.

According to a further preferred embodiment of the system, the sprinkler head is adapted to at least rotate, or move up-and-down as regulated by the controller.

This embodiment is helpful, as it provides for movement of the sprinkler head in two planes, that is, horizontal plane, and the vertical plane. Movement in two planes helps in better optimization of water management during irrigation.

According to another embodiment of the system, the sprinkler head is adapted to reduce flow of water while rotating in correspondence to an empty area where plants are not present by changing an angular velocity of the sprinkler head.

This embodiment is helpful, as it provides for easy implementation of optimizing water utilization in horizontal plane.

According to a further embodiment of the invention, the system comprises a switching control to switch the controller on or off remotely, so as to stop or start a water flow through the sprinkler.

This embodiment is helpful, as it provides for a manual intervention for starting and stopping flow of water.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 illustrates a schematic diagram of a water sprinkling system for spraying water in a field for irrigating the field, according to an embodiment of the invention.
Fig. 2a illustrates watering of plants in the field based on upper height and location of plants, according to an embodiment of the invention.

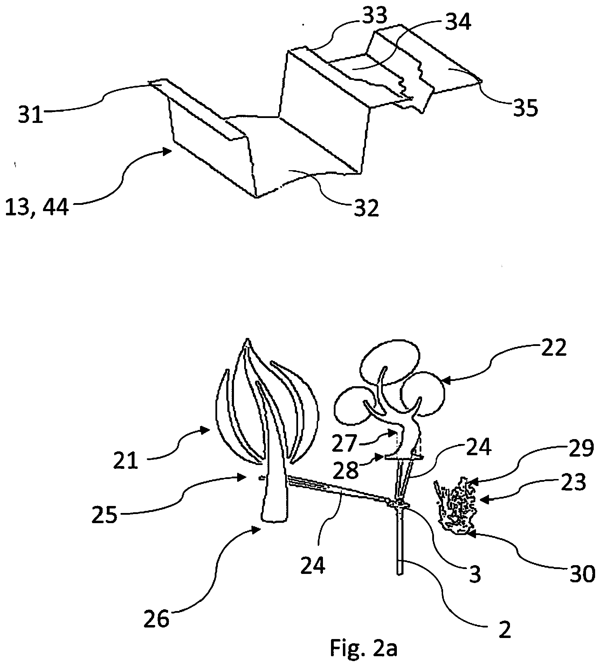

Fig. 2a illustrates watering of plants in the field based on lower height and location of the plants, according to an embodiment of the invention.

### Detailed Description of the Drawings

The present invention is aimed to save water by spraying only required water directly to the position of plants. Firstly, the location or height of the plants is identified. Optionally, location or height of obstacles is also identified. And, based on such identification, further a plant topography in the field is generated. Thereafter, a sprinkler head of the sprinkler is controlled to start spraying water based on the plant topography.

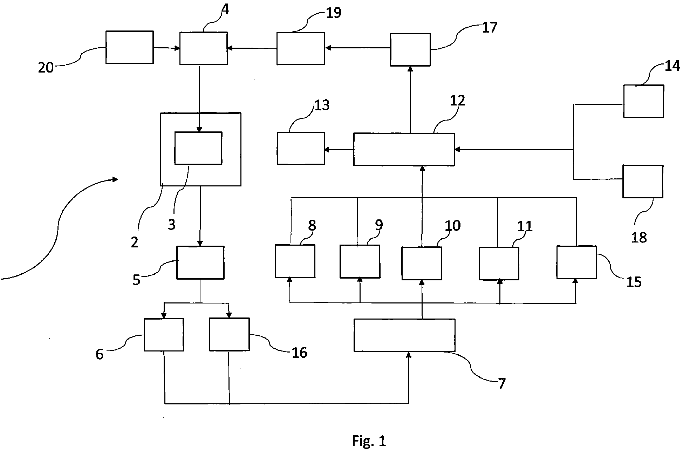

Fig 1 illustrates a schematic diagram a water sprinkling system 1 for spraying water in a field for irrigating the field.

The system 1 is provided with a sprinkler 2 having a sprinkler head 3, and a controller 4 which controls the sprinkler head 4. The sprinkler head 3 sprinkles water variably in various three-dimensional regions of the field. The controller 4 controls the sprinkler head 3 to sprinkle the water in three-dimensional regions variably based on a location of an obstacle in the region, a height of the obstacle in the region, a location of the plant in the region, and a height of the plant in the region. In one embodiment, all the four aspects are not required to be the basis for functionality of the controller 4, the location of an obstacle in the region, the height of the obstacle in the region, the location of the plant in the region, or the height of the plant alone or in any combination can be used by the controller 4 for regulating the sprinkler head 3.

The system 1 is also provided with a switching control 20 for switching the controller 4 on or off remotely. This helps in stopping or starting the water flow through the sprinkler head 3. However, a remote switching on and off of the controller 4 is not desired in certain scenario, and the switch control 20 can be provided in proximity to the sprinkler 2 when the controller 4 and sprinkler 2 are part of one body, or to the controller 4.

To help the controller to identify height and location of the plants and the obstacle, a sensor 5 is provided. The sensor 5 scans a three-dimensional area in the field or above the field, to detect the plants and the obstacles and generate a sensor data 6. It is to be noted that in an alternate embodiment, the sensor 5 may just detect the plant or the obstacles.

The sensor is coupled to a sensor processor 7 which receives and processes the sensor data 6. Based on processing, the sensor processor 7 generates an obstacle location data 8 which defines location of the obstacle in the region, an obstacle height data 9 which defines height of the obstacle in the region, a plant location data 10 which defines the location of the plant in the region, and a plant height data 11 which defines the height of the plant in the region. It is to be noted, in an alternate embodiment, the sensor processor 7 generates only one of the obstacle location data 8, the obstacle height data 9, the plant location data 10, or the plant height data 11, or any combination of them. Based on the data 8, 9, 10, 11 generated by the sensor processor 7, the controller 4 control the sprinkler head 3 to sprinkle the water in three-dimensional regions variably.

The system 1 is also provided with a remote processor 12, remotely placed with respect to the sensor processor 7, and is in a communication coupling with the sensor processor 7. The remote processor 12 receives the data 8, 9, 10, 11 from the sensor processor 7 through the communication coupling, and processes it to generate a plant topography 13 related to height of the plants, and location of the plants in the field, and above the field. In one embodiment, topography of the obstacles is also taken in consideration while generating the plant topography 13. This plant topography 13 is further processed by the remote processor 12 to generate a computer program product 17 which is related to instructions for controlling of the sprinkler head 3. Based on such instructions, a water sprinkling mechanism is made to sprinkler water in three dimensional regions of the field.

The remote processor 12 is in a communication coupling with the controller 4, and sends the computer program product 17 to the controller 4 through a communication network. The controller 4 further stores the computer program product 17 in a memory 19. For functioning, the controller 4 retrieves the computer program product 17 and executes it to control the sprinkler head 3 to sprinkle the water in three-dimensional regions variably. In an alternate embodiment, there is no communication coupling between the remote processor 12 and the controller 4, and a user of the system 1, manually downloads the computer program product in a storage device, and further download the computer program product 17 manually into the memory.

To validate, identify or distinct between the plant and the obstacle, the remote processor 12 is enabled to receive an identification input 14 from a user. Based on the identification input 14, the remote processor 12 optimizes the plant topography 13. The remote processor 12 also processes the identification input 14 while generating the plant topography 13. In one embodiment, the option of identification input 14, and the remote processor 12 generates the plant topography 13 without using the identification input 14. In one embodiment, the identification input 14 is provided by marking obstacles and/or plants over images of the field.

The sensor 5 also detects a boundary of the field, and generates a boundary data 16. The sensor processor 7 receives and processes the boundary data 16 and generates a parameter information 15 which relates to boundary of the field. The remote processor 12 receives the boundary data through the communication coupling between the sensor processor 7 and the remote processor 12. The remote processor 12 also uses the parameter information 15 while generating the plant topography 13. This methodology of generating parameter information is only useful when the boundary of the field is recognizable or detectable by the sensor 5. In some cases, the boundaries of the field are not easily distinguishable, in such scenario, an alternate embodiment is provided, where the remote processor 12 is enable to receive the parameter information 15 from a user. The user can simply enter the geometric information along with dimensions of the geometry of the field, or alternatively, the user can make a marking on an image of the field as the parameter information 15 to determine boundary of the field.

For further providing an efficient water management while irrigation, plant categorization is also done. The remote processor 12 is enabled to receive a plant information 18 from the user related to categorization of the plant. The remote processor 12 uses the plant information 18 also while generating the computer program product 17. There are cases, where users do not have proper information on the plant, and it shall be difficult for them to provide the plant information 18. In such scenario, the remote processor 12 is not required to be enabled to receive the plant information 18, and it generates the computer program product 17 without using the plant information 18.

In one embodiment, the controller 4 can directly receive these data 8, 9, 10, 11, without moving through the processing of the remote processor 12, and processes the data 8, 9, 10, 11 to further regulate the sprinkler head 3.

In another embodiment, the controller 4 is adapted to be optimized on regular basis for regulating the sprinkler head 3, as the obstacles keeps on moving, and height of the plants keeps on changing. In such scenario, the sensor 5 scans the three-dimensional area in the field or above the field at regular intervals and generates the sensor data 6. The sensor data 6 is received by the sensor processor 7, which processes it and generates at least one of the obstacle location data 8, the obstacle height data 9, the plant location data 10, or the plant height data 11, or combination thereof. The sensor processor 7 sends the data 8, 9, 10, 11 to the remote processor 12 at the regular intervals. The remote processor 12 processes the data 8, 9, 10, 11 and generates a new plant topography 13, and compares the new plant topography 13 to a previous plant topography 13. If the new topography 13 is different to the previous topography 13, the remote processor 12 generates a new computer program product 17. This new computer program 17 is replaced in the memory for changing regulation of the sprinkler head 3 by the controller 4.

In one embodiment, the sensor 2 is an optical based sensor, or an imaging device capturing images of the field. In case of imaging device, image processing techniques are used to generate the data 8, 9, 10, 11.

In another embodiment, the sprinkler head 3 at least rotates, or move up-and-down. Rotating of the sprinkler head 8 allows for water according to the watering requirements in a horizontal plane, while moving up-and-down of the sprinkler head 3 takes care the need of watering requirements in vertical plane.

In cases, where there is an empty area in between two regions for watering need, in one embodiment, the sprinkler head 3 reduce flow of water while rotating in correspondence to the empty area where plants are not present by changing an angular velocity of the sprinkler head 3.

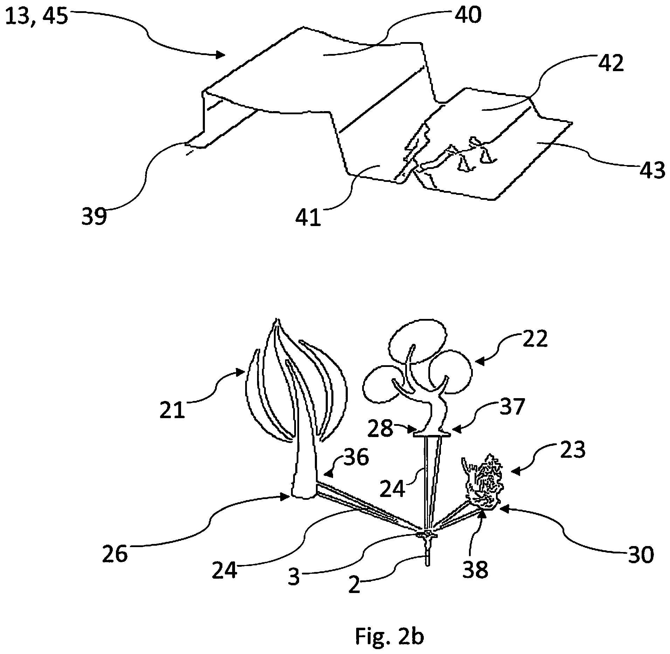

Fig. 2a and Fig. 2b illustrates plant topographies 13, 44, 45 considering watering requirements based on location of the plants, as well, as height of the plants.

In Figs. 2a and 2b, three plants are shown, a first plant 21, a second plant 22, and a third plant 23, which are located at a first location 26, a second location 28, and a third location 30 respectively. In Fig. 2a, the upper heights for watering the plants are provided, the first upper height 25, the second upper height 27, and the third upper height 29. Once, the remote processor receives the locations 26, 28, 30 of the plants 21, 22, 23, and the upper heights 25, 27, 29 of the plants 21, 22, 23, it generates a first plant topography 13, 44 which mentions the regions for watering, a first watering region 31, a second watering region 33, and a third watering region 35, and non-watering regions, a first non-watering region 32, and a second non-watering region 34. The watering regions 31, 33, 35 are the one, which shall be receiving the water, and non-watering regions 32, 34 are one which shall not receive water, or receive minimal water.

In Fig. 2b, the lower height of the plants 21, 22, 23 up to which the water should be received is shown. The lower height of the plants 21, 22, 23, are a first lower height 36, a second lower height 37, and a third lower height 38. The remote processor receives the locations 26, 28, 30 of the plants 21, 22, 23, and the lower heights 36, 37, 38 of the plants 21, 22, 23, and generates a second plant topography 13, 45 which mentions the regions for watering, a fourth watering region 39, a fifth watering region 40, and a sixth watering region 41, and non-watering regions, a fourth non-watering region 42, and a fifth non-watering region 43.

The remote processor uses the first plant topography 13, 44, and the second plant topography 13, 45 to generate the computer program product, which will be executed by the controller to regulate the sprinkler head to maintain a water 24 as required by the plant topographies 13, 44, 45.

Thus, the present invention provides a water sprinkling system 1 for spraying water in a field for irrigating the field. The water sprinkling system 1 includes a sprinkler 2 comprising a sprinkler head 3 which sprinkles water variably in various three-dimensional regions of the field and a controller 4 which controls the sprinkler head 3 to sprinkle the water in three-dimensional regions variably based on at least one of a location of an obstacle in the region, a height of the obstacle in the region, a location of the plant in the region, or a height of the plant in the region or the combination thereof.

### List of reference numbers

- 1: water sprinkler system
- 2: sprinkler
- 3: sprinkler head
- 4: controller
- 5: sensor
- 6: sensor data
- 7: sensor processor
- 8: obstacle location data
- 9: obstacle height data
- 10: plant location data
- 11: plant height data
- 12: remote processor
- 13: plant topography
- 14: identification input
- 15: parameter information
- 16: boundary data
- 17: computer program product
- 18: plant information
- 19: memory
- 20: switching control
- 21: first plant
- 22: second plant
- 23: third plant
- 24: water flow
- 25: first upper height of the first plant
- 26: first location of the first plant
- 27: second upper height of the second plant
- 28: second location of the second plant
- 29: third upper height of the third plant
- 30: third location of the second plant
- 31: first watering region
- 32: first non-watering region
- 33: second watering region
- 34: second non-watering region
- 35: third watering region
- 36: first lower height of the first plant
- 37: second lower height of the second plant
- 38: third lower height of the third plant
- 39: fourth watering region
- 40: fourth non-watering region
- 41: fifth watering region
- 42: fifth non-watering region
- 43: sixth watering region
- 44: first plant topography
- 45: second plant topography

## Claims

1. A water sprinkling system (1) for spraying water in a field for irrigating the field, the system (1) comprising:
- a sprinkler (2) comprising a sprinkler head (3) adapted to sprinkle water variably in various three-dimensional regions of the field; and
- a controller (4) adapted to control the sprinkler head (3) to sprinkle the water in three-dimensional regions variably based on at least one of a location of an obstacle in the region, a height of the obstacle in the region, a location of the plant in the region, or a height of the plant in the region or the combination thereof.

2. The water sprinkling system (1) according to the claim 1 comprising:
- a sensor (5) adapted to scan a three-dimensional area in the field or above the field, to detect at least the plant or the obstacle or the combination thereof, and to generate a sensor data (6); and
- a sensor processor (7) adapted to receive and process the sensor data (7), and adapted to generate at least one of an obstacle location data (8) defining location of the obstacle in the region, an obstacle height data (9) defining height of the obstacle in the region, a plant location data (10) defining the location of the plant in the region, a plant height data (11) defining the height of the plant in the region, or combination thereof,
wherein the controller (4) is adapted to control the sprinkler head (3) to sprinkle the water in three-dimensional regions variably based on at least one of the obstacle location data (8), the obstacle height data (9), the plant location data (10), or the plant height data (11), or combination thereof.

3. The water sprinkling system (1) according to the claim 2 comprising a remote processor (12) placed remotely with respect to the sensor (5), adapted to be in communication coupling to the sensor (5), to receive and process at least one of the obstacle location data (8), the obstacle height data (9), the plant location data (10), or the plant height data (11), or combination thereof, and to generate a plant topography (13) related to height of the plants, and location of the plants in the field, and above the field.

4. The water sprinkling system (1) according to the claim 3, wherein the remote processor (12) is adapted to receive an identification input (14) from a user to identify the plant or the obstacle, wherein the remote processor (12) is adapted to process the identification input (14) to generate the plant topography (13).

5. The water sprinkling system (1) according to any of the claims 3 or 4, wherein the remote processor (12) is adapted to receive a parameter information (15) from the user related to dimensions of the field, wherein the remote processor (12) is adapted to process the parameter information (15) to generate the plant topography (13).

6. The water sprinkling system (1) according to any of the claims 2 to 4, the sensor (5) is adapted to detect a boundary of the field, and to generate a boundary data (16), the sensor processor (7) is adapted to receive and process the boundary data (16), and to generate the parameter information (15), wherein the remote processor (12) is adapted to receive and process the parameter information (15), and to generate the plant topography (13).

7. The water sprinkling system (1) according to any of the claims 3 to 6, wherein the remote processor (12) is adapted to generate a computer program product (17) based on the plant topography (13), the computer program product (17) relates to controlling of the sprinkler head (3) for creating a water sprinkling mechanism to sprinkler water in three dimensional regions of the field.

8. The water sprinkling system (1) according to the claim 7, wherein the remote processor (12) is adapted to receive a plant information (18) from the user related to categorization of the plant, wherein the remote processor (12) is adapted to process the plant information (18) to generate the computer program product (17).

9. The water sprinkling system (1) according to any of the claims 7 or 8 comprising a memory (19) adapted to store the computer program product (17), the computer program product (17) on execution by the controller (4), enables the controller (4) to control the sprinkler head (3) to sprinkle the water in three-dimensional regions variably.

10. The water sprinkling system (1) according to the claim 9, wherein the remote processor (12) is adapted to send the computer program product (17) to the controller (4) for storing in the memory (19) via a communication network.

11. The water sprinkling system (1) according to any of the claims 9 or 10, wherein the sensor (5) is adapted to scan the three-dimensional area in the field or above the field at regular intervals and generates the sensor data (6), the sensor processor (7) is adapted to receive and process the sensor data (6), and to generate and send at least one of the obstacle location data (8), the obstacle height data (9), the plant location data (10), or the plant height data (11), or combination thereof, to the remote processor (12) at the regular intervals, the remote processor (12) processes at least one of the obstacle location data (8), the obstacle height data (9), the plant location data (10), or the plant height data (11), or combination thereof, to generate a new plant topography (13), compare the new plant topography (13) to a previous plant topography (13), and if the new topography (13) is different to the previous topography (13), the remote processor (12) is adapted to generate the computer program product (17).

12. The water sprinkling system (1) according to any of the claims 2 to 11, wherein the sensor (2) is an optical based sensor.

13. The water sprinkling system (1) according to any of the claims 1 to 12, wherein the sprinkler head (3) is adapted to at least rotate, or move up-and-down as regulated by the controller (4).

14. The water sprinkling system (1) according to the claim 13, wherein the sprinkler head (3) is adapted to reduce flow of water while rotating in correspondence to an empty area where plants are not present by changing an angular velocity of the sprinkler head (3).

15. The water sprinkling system (1) according to any of the claims 1 to 14 comprising a switching control (20) to switch the controller (4) on or off remotely, so as to stop or start a water flow through the sprinkler head (3).
